## Europäisches Patentamt
## European Patent Office
## Office européen des brevets

(11) Numéro de publication: **0 192 536**
**B1**

## FASCICULE DE BREVET EUROPEEN

(45) Date de publication du fascicule du brevet:
**01.06.88**

(21) Numéro de dépôt: **86400223.3**

(22) Date de dépôt: **03.02.86**

(51) Int. Cl.⁴: **B 23 K 1/00**, C 23 G 5/04

(54) Perfectionnements aux machines de chauffage d'articles ou produits par condensation de vapeurs sur ceux-ci.

(30) Priorité: **04.02.85 FR 8501489**

(43) Date de publication de la demande:
**27.08.86 Bulletin 86/35**

(45) Mention de la délivrance du brevet:
**01.06.88 Bulletin 88/22**

(84) Etats contractants désignés:
**AT BE CH DE FR GB IT LI LU NL SE**

(56) Documents cités:
**EP - A - 0 112 484**
**US - A - 3 632 480**
**US - A - 4 055 217**

(73) Titulaire: **PIEZO-CERAM ELECTRONIQUE, Le Péage Route de Grasse, F-06600 - Antibes (FR)**

(72) Inventeur: **Pescatore, Richard, 13, Avenue de la Valmasque, F-06600 Antibes (FR)**
Inventeur: **Boumendil, Jean-Jack, Les Hortensias No. 15Les Hameaux du Soleil, F-06270 Villeneuve Loubet (FR)**

(74) Mandataire: **de Boisse, Louis et al, CABINET DE BOISSE 37, Avenue Franklin D. Roosevelt, F-75008 Paris (FR)**

## Description

La présente invention a pour objet des perfectionnements aux machines de chauffage d'articles ou produits par condensation de vapeurs sur ceux-ci.

On connaît des machines de chauffage d'articles ou produits par condensation de vapeurs sur ceux-ci (voir, par exemple, FR-A1-2.243.045, FR-A1-2.553.186 et US-A-4.055.217). Dans ces machines, les articles ou produits sont chauffés à la température désirée par condensation de vapeur primaire. Comme le liquide primaire constituant la source de la vapeur primaire est habituellement un liquide perfluorocarbure inerte à haut point d'ébullition très coûteux, il est usuel de confiner la masse de vapeur primaire vis-à-vis de l'atmosphère par une masse de vapeur secondaire générée à partir d'un liquide secondaire habituellement un chloro-fluorocarbure, d'un point d'ébullition moins élevé que le liquide primaire. Il est connu aussi de prévoir des moyens de condensation de la vapeur secondaire pour éviter que celle-ci ne s'échappe à l'atmosphère et de recycler le condensat de vapeur primaire dans la machine. Il est connu, également, de séparer le liquide secondaire de l'eau provenant de l'atmosphère contenue dans le condensat par élimination de l'eau surnageante dans un séparateur (voir, par exemple, US-A-3.632.480 et EP-A1-0112.484).

L'invention a pour objet de fournir divers perfectionnements au type de machines susindiqué.

Un premier perfectionnement a pour but d'abaisser la teneur en ions chlore et fluor dans les vapeurs primaire et secondaire de l'équipement et provenant de la décomposition de ces vapeurs. Dans ce but l'invention prévoit un lavage amélioré du liquide secondaire. De plus, un balayage de gaz secs interposé entre l'air atmosphérique humide et la vapeur secondaire s'oppose à l'introduction de l'humidité atmosphérique.

Un autre perfectionnement consiste à compenser automatiquement les variations du régime de fonctionnement par un contrôle du bilan de puissance.

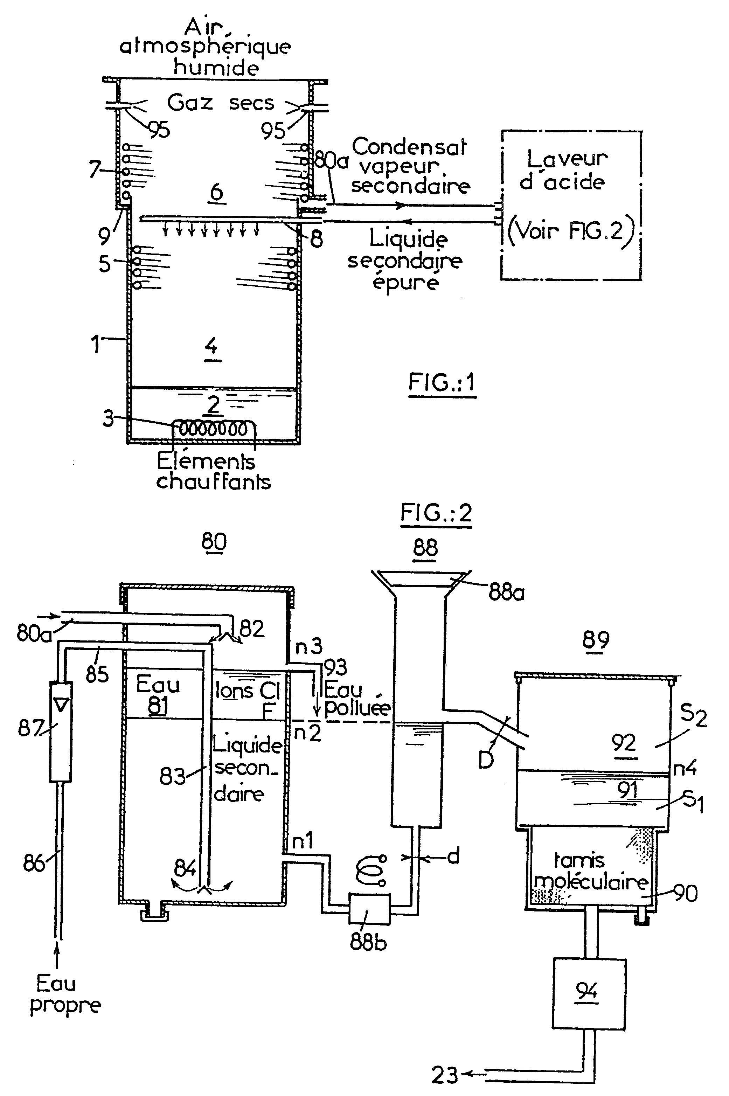

Ces perfectionnements seront décrits ci-après d'une façon plus détaillée en regard du dessin annexé donné à titre d'exemple, sur lequel la figure 1 est une représentation schématique d'une machine perfectionnée, tandis que la figure 2 est une coupe détaillée du laveur d'acide montré à la droite de la figure 1.

On a représenté schématiquement sur la figure 1 un exemple de machine auquel les perfectionnements de l'invention peuvent s'appliquer.

Cette machine comprend une cuve verticale 1, par exemple de section rectangulaire, comprenant, du bas vers le haut, du liquide primaire 2 (habituellement du perfluorocarbure liquide) pouvant être porté à l'ébullition par un ou plusieurs éléments chauffants 3 et/ou des moyens équivalents (bain-marie), une chambre de chauffage 4 de l'article ou produit à chauffer remplie, en service, de vapeurs du liquide primaire; un serpentin thermostaté 5 de condensation des vapeurs de liquide primaire maintenu à une température intermédiaire entre les points d'ébullition des liquides primaire et secondaire; une zone 6 remplie d'une masse de vapeurs d'un liquide secondaire (habituellement un chloro-fluorocarbure) ayant un point d'ébullition inférieur à celui du liquide primaire, cette masse de vapeurs formant bouchon pour les vapeurs de liquide primaire; un serpentin refroidi 7 de condensation des vapeurs de liquide secondaire. La vapeur secondaire peut être générée par injection de liquide secondaire par le moyen d'une rampe pulvérisatrice 8, comme représenté, reliée à un réservoir de liquide secondaire. En variante, le liquide secondaire pourrait être simplement mélangé avec le liquide primaire 2.

Le liquide secondaire condensé sur les serpentins 7 est recueilli dans une gouttière 9 et dirigé vers le dispositif épurateur de la figure 2 qui constitue l'un des perfectionnements de l'invention. Après épuration, le liquide secondaire sert à alimenter la rampe 8 (ou est renvoyé dans le bas de la cuve dans le cas de la variante signalée).

On décrira maintenant plus en détail les divers perfectionnements fournis par la présente invention.

### 1. Abaissement des teneurs en chlore et fluor ioniques dans la machine

En raison d'un processus de dégradation thermique, des ions $H^+$, $Cl^-$, $F^-$ apparaissent dans la vapeur secondaire au contact avec l'humidité atmosphérique. Ces ions donnent naissance à des acides qui provoquent: la corrosion de l'équipement et la pollution des articles et pièces chauffées.

Il faut donc éliminer ces ions et éviter de les recycler dans la machine; il faut également éviter l'introduction d'humidité dans celui-ci.

Le dispositif laveur d'acide représenté en détail sur la figure 2 comporte un premier bac 80 placé sur le retour 80a des condensats qui traverse une couche d'eau 81 afin de piéger les ions. Pour favoriser le lavage, un diffuseur 82 divise les condensats en fines gouttelettes avant pénétration dans l'eau. La couche d'eau est alimentée à niveau constant par une injection d'eau propre avec diffuseur 84, en point bas du laveur et sortie d'eau polluée en haut au niveau n3. Un col de cygne 85 sur la canalisation 86 d'amenée de l'eau de lavage évite un retour de liquide secondaire dans l'eau, qui pourrait bloquer le débitmètre 87. Au niveau n1, le liquide secondaire, éventuellement chargé légèrement en eau, est prélevé à travers une électrovanne 88b. Cette électrovanne permet d'isoler le bac 80 des bacs 88 et 89 pendant les périodes d'arrêt et de démarrage de l'équipement. Le bac 88 permet d'assurer le remplissage en début ou en cours d'opération de l'équipement. Il est muni d'un couvercle amovible 88a pour le remplissage. Le bac 89 joue le rôle de réserve de liquide secondaire et de séchage de celui-ci sur un tamis moléculaire 90, afin d'éliminer toute trace d'eau. Cette disposition permet d'éliminer l'eau de lavage résiduelle ainsi que l'eau introduite en cours de chargement de l'équipement en liquide secondaire. Ce tamis

peut être constitué par exemple par de la zéolite formant un réseau cristallin de silico-aluminate dans lequel des cations monovalents K ou Na ou divalents ont été introduits, la taille des cations détermine la dimension des pores qui piègent l'eau. Une matière de ce genre est connue sous la marque «silliporite».

Deux contrôles de niveaux S1 en 91 et S2 en 92 permettent de détecter le niveau minimum de marche, nécessitant un remplissage de l'équipement, et le niveau maximum de fin de remplissage.

Le choix des diamètres d et D des tuyauteries, le volume relatif du bac 88 par rapport aux bacs 80 et 89, et l'électrovanne 88b permettent d'éviter une arrivée d'eau directe dans le liquide secondaire de la réserve et des variations du niveau n2 intempestives, entraînant un écoulement du liquide secondaire par le rejet 93 déversant l'eau polluée.

La pompe doseuse 94 permet de recycler le liquide secondaire vers la cuve de l'équipement à travers les gicleurs de pulvérisation 23.

Le niveau n2 détermine un volume $V_1$ dans le bac 80. Le niveau n2 détermine dans le bac 88 un volume $V_2$ tel que $V_1 < V_2$. Le niveau n3 est déterminé en fonction de la différence des densités de l'eau de lavage (d = 1) et du liquide secondaire, dont la densité est voisine de 1,5. Le niveau n4 est variable durant la marche.

Pour éviter l'introduction d'humidité dans la machine on fait selon l'invention un balayage de gaz secs sur la partie supérieure de la cuve de la machine, ce qui empêche le contact direct de l'air atmosphérique avec les vapeurs produites dans la cuve. On voit sur la figure 1 des tuyères 95 réparties sur le haut de la cuve et par lesquelles de l'air sec est injecté radialement.

Cette disposition permet, dans le cas de la polymérisation de polymères en phase vapeur, d'éviter l'introduction d'eau dans la vapeur primaire, si l'on minimise l'importance de la vapeur secondaire et, dans le cas du brasage, d'éviter l'introduction d'eau dans la vapeur secondaire.

## 2. *Compensation automatique des variations de régime de charge de la machine*

Le bilan thermique de la machine est tel que l'énergie transmise par l'élément ou les éléments chauffants au liquide primaire, par le jeu de la vapeur primaire, équilibre la déperdition thermique des parois de la cuve, provoque l'évaporation du liquide secondaire, échauffe l'eau du serpentin secondaire et échauffe également la charge.

En régime stabilisé, la déperdition des parois et l'énergie absorbée par la condensation du liquide secondaire sont des constantes, caractéristiques du dimensionnement de l'équipement. L'échauffement de l'eau sera donc la résultante de l'apport énergétique par les éléments chauffants et de l'absorption de la masse introduite.

Selon l'invention on régule donc le fonctionnement thermique de la machine en ajustant la puissance transmise aux éléments chauffants en fonction de la nature de la charge introduite, par contrôle de l'élévation de température de l'eau du serpentin 7, servant à condenser les vapeurs du liquide secondaire.

L'expérimentation montre que le temps de réaction de cette régulation est très court au regard de l'énergie thermique de l'équipement, permettant un maintien de la densité de vapeur environnant la pièce par la détermination d'une légère surchauffe résiduelle de l'eau du serpentin secondaire.

Des dispositifs annexes de contrôle des températures complètent l'équipement sur le plan de la sécurité.

## Revendications

1. Machine de chauffage d'un article ou produit à une température élevée par condensation de vapeur sur celui-ci, qui comprend:
— une chambre de chauffage (4) de l'article ou produit à chauffer, cette chambre (4) étant propre à recevoir une vapeur de liquide primaire ayant un point d'ébullition qui soit au moins égal à ladite température élevée,
— au moins un passage (6) situé au-dessus de la chambre de chauffage (4) et pour l'amenée et l'évacuation dudit article ou produit à chauffer,
— des moyens de déplacement de l'article ou produit à chauffer de l'entrée à la sortie de la machine,
— des éléments chauffants (3) propres à porter à l'ébullition le liquide primaire (2) contenu dans un bouilleur et à produire de la vapeur primaire destinée à être envoyée dans ladite chambre (4),
— des moyens de condensation primaires (5) propres à condenser la vapeur primaire en liquide primaire,
— des moyens collecteurs de condensat primaire propres à collecter la vapeur primaire condensée et à la renvoyer au bouilleur,
— des moyens pour établir dans ledit passage (6) une masse de vapeur d'un liquide secondaire ayant un point d'ébullition moindre que celui du liquide primaire, ladite masse remplissant complètement un tronçon dudit passage (6),
— des moyens de condensation (7) secondaire propres à condenser la vapeur secondaire en liquide secondaire,
— des moyens collecteurs (9) secondaires propres à collecter le condensat de vapeur secondaire et à le faire passer dans un dispositif d'épuration (80, 88, 89) en vue de son recyclage vers les moyens d'établissement de la masse de vapeur secondaire,
caractérisée en ce que le dispositif d'épuration de liquide secondaire comprend un premier bac (80) d'épuration à l'eau à deux niveaux (n1, n3) d'extraction l'un (n3) vers le haut du bac (80) pour l'eau polluée, l'autre vers le bas du bac (80) à hauteur (n1) au-dessus du fond du bac (80) pour le liquide secondaire qui peut encore contenir un peu d'eau, et un deuxième bac (89) qui est alimenté par le liquide secondaire prélevé audit niveau (n1) dans le premier bac (80), le deuxième bac (89) étant muni de moyens d'élimination de l'eau résiduelle.

2. Machine selon la revendication 1, caractérisée en ce que les deux bacs sont reliés entre eux par une vanne (88b).

3. Machine selon les revendications 1 et 2, caractérisée par la disposition d'un bac intermédiaire (88) avec porte de chargement agencée en aval de la vanne et communiquant avec le second bac (89) à un niveau (n2) intermédiaire entre les deux niveaux susdits (n1 et n3).

4. Machine selon l'une des revendications précédentes 1 à 3, caractérisée par des moyens (95) agencés à la partie supérieure du passage (6) et propres à injecter dans celle-ci un gaz sec formant barrage entre l'atmosphère ambiante et l'intérieur du passage (6).

5. Machine selon l'une des revendications précédentes 1 à 4, caractérisée en ce que la puissance transmise aux éléments chauffants (3) est réglée par contrôle de l'élévation de température de l'eau de refroidissement servant à condenser la vapeur du liquide secondaire.

## Patentansprüche

1. Vorrichtung für das Heizen von Gegenständen oder Produkten durch Dampfkondensation mit:
— einer Heizkammer (4) zum Erwärmen des Artikels oder des Produkts, wobei die Kammer (4) den Dampf einer Primärflüssigkeit aufnimmt, deren Siedepunkt mindestens dem der Heiztemperatur entspricht,
— mindestens einem oberhalb der Heizkammer (4) befindlichen und in diese hineinführenden Durchgang für die Zuführung bzw. Entfernung des besagten zu ewärmenden Produktes oder Artikels,
— Vorrichtung zur Verschiebung des zu erwärmenden Artikels oder Produktes von dem Eingang zu dem Ausgang der Vorrichtung,
— Heizelementen (3), die in einem Dampfkessel enthaltene Primärflüssigkeit auf Siedetemperatur erhitzen und den für die Heizkammer (4) bestimmten Primärdampf erzeugen,
— ersten Vorrichtungen (5) zur Kondensation des Primärdampfes in Primärflüssigkeit,
— Auffangvorrichtungen für das Primärkondensat, die den kondensierten Primärdampf aufnehmen und ihn wieder dem Dampfkessel zuführen,
— Vorrichtungen, die in dem besagten Durchgang (6) eine Dampfmenge einer Sekundärflüssigkeit mit einem im Vergleich zur Primärflüssigkeit niedrigeren Siedepunkt erzeugen und halten, wobei die besagte Dampfmenge vollständig einen Abschnitt des Durchganges (6) ausfüllt,
— zweiten Vorrichtungen (7), die den Sekundärdampf zu Sekundärflüssigkeit kondensieren,
— zweiten Auffangvorrichtungen (9), die das Kondensat des Sekundärdampfes auffangen und einer Reinigungsvorrichtung (80, 88, 89) zuführen, bevor es zu der Vorrichtung zur Erzeugung einer Sekundärdampfmenge zurückgeleitet wird, dadurch gekennzeichnet, dass die Reinigungsvorrichtung für die Sekundärflüssigkeit einen ersten mit Wasser betriebenen Reinigungstrog (80) mit zwei auf unterschiedlichem Niveau (n1, n3) befindlichen Ausgängen enthält, von denen einer (n3) am oberen Ende des Reinigungstroges (80) für das verunreinigte Wasser und einer (n1) oberhalb des Bodens des Reinigungsroges (80) für die Sekundärflüssigkeit angeordnet ist, die noch geringe Wassermengen enthalten kann und dass ein zweiter Reinigungstrog (89) vorgesehen ist, der mit der auf dem besagten Extraktionsniveau (n1) aus dem ersten Reinigungstrog (80) ausgeschiedenen Sekundärflüssigkeit versorgt wird, wobei der zweite Reinigungstrog (89) mit Vorrichtungen für die Entfernung des verbliebenen Wassers versehen ist.

2. Vorrichtung nach Anspruch 1, dadurch gekennzeichnet, dass die beiden Reinigungströge über ein Ventil (88b) miteinander verbunden sind.

3. Vorrichtung nach Anspruch 1 und 2, dadurch gekennzeichnet, dass ein weiterer Reinigungstrog (88) dazwischenliegend angeordnet ist mit einem vom Ventil aus gesehen stromabwärts angeordneten Zufluss und mit einer Verbindung zum zweiten Reinigungstrog (89), deren Niveau (n2) zwischen den beiden erwähnten Niveaus (n1, n3) liegt.

4. Vorrichtung nach einem der vorhergehenden Ansprüche 1 bis 3, dadurch gekennzeichnet, dass am oberen Teil des Durchgangs (6) Vorrichtungen angebracht sind zur Einspritzung eines trockenen Gases, das eine Sperre zwischen der umgebenden Atmosphäre und dem Inneren des Durchganges (6) erzeugt.

5. Vorrichtung nach einem der Ansprüche 1 bis 4, dadurch gekennzeichnet, dass die Leistung der Heizelemente (3) über die Temperaturerhöhung des für die Kondensation des Dampfes der Sekundärflüssigkeit benötigten Kühlwassers gesteuert wird.

## Claims

1. Machine for heating an article or product to a high temperature by condensing vapor on it, which comprises:
— a chamber (4) for heating the article or product which is to be heated, said chamber (4) being adapted to receive a vapor of primary liquid having a boiling point which is at least equal to said high temperature,
— at least one passage (6) located above said heating chamber (4) and leading into said chamber (4) for the introduction and discharge of said article or product to be heated,
— means for moving the article or product to be heated from the inlet to the outlet of the machine,
— heating elements (3) adapted to bring to boiling point the primary liquid (2) contained in a boiler and to produce primary vapor intended to be delivered into said chamber (4),
— primary condensation means (5) adapted to condense the primary vapor into primary liquid,
— primary condensate collector means adapted to collect the condensed primary vapor and to return it to the boiler,

— means for establishing in said passage (6) a mass of vapor of a scondary liquid having a boiling point lower than that of the primary liquid, said mass completely filling a portion of said passage (6),

— secondary condensation means (7) adapted to condense the secondary vapor into secondary liquid,

— secondary collector means (9) adapted to collect the secondary vapor condensate and to pass it into a scrubbing device (80, 88, 89) for the purpose of recycling to the means establishing the mass of secondary vapor, characterized in that the secondary liquid scrubbing device comprises a first vessel (80) of scrubbing by water having two extraction levels (n1, n3), one (n3) towards the top for the polluted water and the other near the bottom of the vessel (80) at a certain height (n1) above the bottom of the vessel (80) for the secondary liquid which may still contain a little water, and a second vessel (89) which is supplied with the secondary liquid taken from said level (n1) in the first vessel (80), the second vessel (89) being provided with means for removing residual water.

2. Machine according to Claim 1, characterized in that the two vessels are connected together by a valve (88b).

3. Machine according to Claims 1 and 2, characterized by the provision of an intermediate vessel (88) having a loading inlet disposed downstream of the valve and communicating with the second vessel (89) at a level (n2) intermediate between the two said levels (n1 and n3).

4. Machine according to any of the preceeding Claims 1 to 3, characterized by means (95) disposed in the top part of the passage (6) and adapted to inject into the latter a dry gas forming a barrier between the ambient atmosphere and the interior of the passage (6).

5. Machine according to any of the preceeding Claims 1 to 4, characterized in that the power transmitted to the heating elements (3) is regulated by monitoring the temperature rise of the cooling water serving to condense the secondary liquid vapor.

0 192 536

**FIG.:1**

Air atmosphérique humide

Gaz secs

95          95

7

6

9          80a    Condensat vapeur secondaire

8

5          Liquide secondaire épuré

Laveur d'acide (Voir FIG.2)

1          4

2

3          Eléments chauffants

**FIG.:2**

80          88          88a

89

80a          82

85          n3          93

Eau          Ions Cl          Eau Polluée
81          F          n2

87          Liquide secondaire          S2
83          92

94          n4
91          S1

86          n1          D
84          d

tamis moléculaire          90

88b          94

Eau propre          23

7